# EUROPEAN PATENT APPLICATION

(11) **EP 2 799 166 A1**
(43) Date of publication of application: **05.11.2014**
(21) Application number: 12863618.0
(22) Date of filing: 28.12.2012
(51) Int. Cl.: B22F 5/10, B22F 3/11, C22C 1/08

(54) **POROUS SINTERED BODY AND PROCESS FOR PRODUCING POROUS SINTERED BODY**

(30) Priority: 28.12.2011 JP 2011288558
(71) Applicant: Taisei Kogyo Co., Ltd., Neyagawa-shi, Osaka 572-0073 (JP)
(72) Inventor: TANAKA Shigeo, Neyagawa-shi Osaka 572-0073 (JP); KANOKO Yasuhiro, Neyagawa-shi Osaka 572-0073 (JP)
(74) Representative: Betten & Resch
(86) International application number: PCT/JP2012/084188
(87) International publication number: WO 2013/100147

(57) **Abstract**

[Object]

The present invention provides a porous sintered body which has a uniform porosity, a high level of freedom in forming, allowing to be formed into varieties of shapes and various levels of porosity, and to be formed to an extremely high level of porosity.

[Means for Solution]

There is provided a porous sintered body 1 which is obtained by sintering a powder 4, and includes hollow cores 5 following a vanished shape of an interlaced or otherwise structured fibriform vanisher material 2; sintered walls 6 obtained by sintering the powder held around the cores and extending longitudinally of the cores; and voids 7 between the sintered walls.

## Description

### TECHNICAL FIELD

The present invention relates to porous sintered bodies. Specifically, the invention relates to highly porous sintered bodies having a high level of freedom in body formation.

### Background Art

Highly porous metal sheets are used widely, as electrode base materials for nickel-hydrogen batteries and lithium batteries and electrode base materials for fuel cells for example, and many other fields as well, such as biomaterials, catalyzer base materials, and so on.

Conventionally, the porous metal sheet is obtained by first, e.g., compressing a metal fiber into a sheet form, and then sintering the sheet. However, according to this method, it is difficult to achieve a uniform metal fiber density, and therefore has been difficult to obtain a porous metal sheet which has a uniform porosity.

In order to solve this problem, there is proposed a method for making a uniformly porous metal sheet which includes a process of uniformly dispersing a fibriform raw material or a powdery raw material within a dispersing chamber of a packing apparatus, and then allowing the dispersed raw material to fall on a substrate placed beneath.

### LITERATURE ON CONVENTIONAL ART

### PATENT LITERATURE

Patent Document 1: JP-A 2007-262571

### SUMMARY OF THE INVENTION

### PROBLEMS TO BE SOLVED BY THE INVENTION

The method described above is capable of forming a porous metal sheet of a uniform porosity. However, it is difficult to obtain thin porous sheets having a thickness of a few micrometers through a few tens of micrometers because the method employs a raw material which has a diameter of 10 µm through 100 µm. On the other hand, it is also difficult with the above-described fibriform metal, to form a shape which has a greater thickness such as a few millimeters through a few tens of millimeters while maintaining the uniform porosity. In other words, there is a limitation to the form of formed bodies. In still other words, level of freedom in forming a porous sintered body is low.

Also, the fibriform metal or the powdery metal, which serves as a building block of the porous body, is utilized as it is, i.e., as of the size. In other words, the thickness and porosity of the formed body are dependent upon the shape and dimensions of these members. For this reason, it is difficult to make a wide range of metal porous bodies of a variety of shapes and porosities.

Another problem is that powdery metal in dispersion liquid tends to precipitate quickly, to concentrate in a lower layer. This means that although it is possible to make porous sintered bodies having a uniform density of the powdery metal in surface directions, it is difficult to make one which has a uniform composition in the thickness direction.

When a metal porous body is utilized as a catalyzer, it is the surface of the fibriform metal or of the powdery metal that provides functions as the catalyzer. In order to increase the surface area, it is necessary that the fibriform metal has a small diameter, or the powdery metal has a small particle diameter, which, however, poses a problem of poor form retention during formation and sintering. Because of this, if a fibriform metal or a powdery metal of a small dimension is used directly to form a porous body preparation, it is impossible to obtain a metal porous body of a desired form or porosity.

An object of the present invention is to solve the above-described problems and to provide a porous sintered body which has a uniform porosity, a high level of freedom in body formation which allows formation into varieties of shapes and various levels of porosity, and formation into forms of even an extremely high level of porosity.

### MEANS FOR SOLVING THE PROBLEMS

An arrangement described in Claim 1 of the present application discloses a porous sintered body obtained by sintering a powder. The porous sintered body includes hollow cores following a vanished shape of an interlaced or otherwise structured fibriform vanisher material; sintered walls extending longitudinally of the cores and obtained by sintering the powder held around the cores; and voids between the sintered walls.

The present invention relates to porous sintered bodies which are made by first applying a sinterable powder on a surface of an interlaced or otherwise structured fibriform vanisher material, then vanishing the fibriform vanisher material while sintering the powder which is held on the fiber surface.

The porous sintered body according to the present invention includes hollow cores resulting from vanishment of the fibriform vanisher material; and sintered walls formed by sintering the powder around the cores. The sintered wall is formed longitudinally of the cores. Specifically, the sintered wall constitutes a porous sintered body which follows an outer shape of the fibriform vanisher material and has a shape resulting from the interlacing. Therefore, the body not only has a shape along the longitudinal axis of the fibriform vanisher material but also has voids on both inner and outer sides of the sintered wall which are obtained by sintering the powder. Hence, it is possible to obtain a porous sintered body which has a greater porosity than that of the porous body which is formed by interlacing or otherwise structuring the fibriform vanisher material. Further, since the inside and the outside of the sintered wall provide surfaces, it is possible to make a porous sintered body which has a very large surface area.

Also, according to the present invention, it is possible to make the sintered wall thinner, by using the powder which has a smaller particle size. In other words, it is now possible to achieve remarkable increase in the porosity or in the surface area.

As disclosed in Claim 2, it is possible to make the sintered walls provide communication between the cores and the voids via absent parts. Since the absent part provides communication between the core and the void, it becomes possible to use not only an outside surface of the sintered wall but also an inside surface thereof, providing an advantage, when used as a catalyzer for example, that a remarkable increase can be achieved in the area available as a reaction surface. The absent part can be adjusted easily by adjusting the amount of lamination of the powder and sintering temperature of the powder. Preferably, for example, adjustment is made so that the absent part accounts for 50 through 20%.

As disclosed in Claim 3, the sintered wall can be obtained through necking sintering of the powder which is laminated in one through three layers on outer circumferential regions of the fibriform vanisher material. The above-described arrangement makes it possible to remarkably reduce the thickness of the sintered wall. The ratio of the absent part can also be adjusted easily by adjusting the sintering temperature.

Also, by sintering the powder in a necking fashion, corrugations are formed on the sintered wall following the powder pattern. This makes it possible to further increase the surface area in the porous body. Also, since the powder's shape is retained, it becomes possible to decrease the amount of shrinkage at the time of sintering, making it possible to obtain a porous sintered body of increased accuracy in the form and dimensions. Further, by performing necking sintering by way of diffused junction, it becomes possible to sinter the powder at significantly lower temperatures than temperatures required for fusion sintering. As a result, it is now possible to bond powder particles with each other and fix the particles on the outer circumferential surfaces of the fibriform vanisher material before the fibriform vanisher material vanishes, and after the fibriform vanisher material has varnished, to keep the shape of the walls longitudinally of the fibriform vanisher material until fusion sintering takes place.

There is no specific limitation to the material or the shape of the fibriform vanisher material as far as the vanisher material vanishes by the time the powder has been sintered. Examples of the material include not only natural fibers from Mitsumata (*Edgeworthia chrysantha*)*,* Kozo (*Broussonetia kazinoki* × *B. papyrifera*), etc. but also artificial fibers such as rayon.

By selecting appropriate dimensions and a shape for the fibriform vanisher material, and a mode of structuring, i.e., interlacing or other, it is possible to obtain porous bodies of predetermined dimensions and shapes. Since the powder is sintered while being held on the outer circumferential surface of the fibriform vanisher material, it is possible not only to obtain porous sintered bodies of various shapes but also to have a uniform porosity in different regions of the porous sintered body. For example, it is possible to make a series of porous sintered bodies, from a very thin sheet-like porous sintered body to a thick, three-dimensional porous sintered body, of a uniform porosity and predetermined shapes.

There is no specific limitation to material from which the powder is made. Also, two or more materials may be mixed to produce the powder. Further, the powder may be made of a mixture of a sintering powder and a non-sintering powder.

There is no specific limitation to the particle size of the powder; it is necessary, however, that the powder particle size allows the powder to be held around the fibriform vanisher material at sinterable densities. Specifically, it is preferable as disclosed in Claim f4, that the powder has an average particle size which is 1/5 through 1/50 of a diameter of the fibriform vanisher material.

If the powder has a particle diameter which is greater than 1/5 of the diameter of the fibriform vanisher material, it becomes difficult to hold the powder around the fibriform vanisher material. On the other hand, if the powder has a particle diameter which is smaller than 1/50 of the diameter of the fibriform vanisher material, it is impossible to retain the form or achieve strength during and/or after sintering.

As disclosed in Claim 5, the powder may include: a first powder which has a higher sintering initiation temperature; and a second powder which has a lower sintering initiation temperature. By using powders having different sintering initiation temperatures, it becomes possible to ensure form retention during the sintering.

The first powder and the second powder may be provided by different metal powders. Also, in cases where the powders are provided by the same material, the sintering initiation temperature for one can be lowered by choosing a different particle size from the other. For example, as disclosed in Claim 9, the second powder may have an average particle size not greater than 1/10 of an average particle size of the first powder. This increases surface activity and decreases the sintering initiation temperature. It is not necessary that the sintering initiation temperature is the melting temperature of the powder; rather, any temperature is acceptable as far as the first powder can retain desired form at that specific temperature. For example, under enhanced surface activity, sticking force develops due to diffusion at areas of contact between the first powder and the second powder, which ensures form retention that the shape along the longitudinal axis of the fibriform vanisher material is maintained even if the powder is not melted yet.

Further, as disclosed in Claim 6, there may be an arrangement that the first powder has a higher sintering initiation temperature than a vanishing completion temperature of the fibriform vanisher material, whereas the second powder has a lower sintering initiation temperature than the vanishing completion temperature of the fibriform vanisher material.

If a high sintering temperature is required to sinter the powder, there can be a case where the fibriform vanisher material has vanished completely before the powder begins being sintered. In such a case as this, it can become impossible to keep the powder at the position along an outer circumference of the fibriform vanisher material during sintering. Sintering under such a state can cause unacceptably large deformation in the sintered wall, leading to inability to obtain a porous sintered body of a predetermined porosity or predetermined shape.

By using the second powder which has a lower sintering initiation temperature than a vanishing completion temperature of the fibriform vanisher material or which has a specific surface characteristic for generating a cohesive force for bonding the powder particles to each other, it becomes possible to hold the first powder, via the second powder, on the outer circumferential regions of the fibriform vanisher material after the fibriform vanisher material has vanished. Then, by sintering particles of the first powder with each other thereafter, the sintering powder is sintered while the powder particles are held along the outer circumferential surface of the fibriform vanisher material. The second powder can be applied on the outer circumference of the fibriform vanisher material simultaneously with the first powder. Alternatively, the first powder maybe first applied to the outer circumference of the fibriform vanisher material, followed by application of the second powder onto the first powder. Still further, there may be an arrangement where the second powder is contained in the fibriform vanisher material so that it appears as the fibriform vanisher material vanishes. There is no specific limitation to material from which the second powder is made. For example, a metal powder may be used. There can also be an arrangement where the second powder is provided by a residue component, carbide, etc. which occur when the fibriform vanisher material or solvent in slurry vanishes in the fibriform vanisher material vanishing step or the sintering step. There may be arrangements where the second powder is designed to stay after the first powder is sintered, or there may be arrangements where the second powder is designed to vanish.

Claim 7 discloses an arrangement where the second powder is sintered to bridge particles of the first powder. It becomes possible to sinter the second powder to particles of the first powder in a bridging manner by using the second powder which has a lower sintering initiation temperature than that of the first powder and by mixing the two powders at an appropriate ratio. This arrangement provides an advantage in cases where the first powder has a high sintering initiation temperature, that the second powder keeps positional relationship among particles of the first powder during the sintering, making it possible to obtain porous sintered bodies having a uniform porosity.

Sometimes, a porous sintered body must be made from a powder which is hard to sinter, or does not sinter. For example, when sintering a functional ceramic which has a very high sintering temperature, there can be cases where the sintering temperature is so high that it is impossible to mix any other materials such as metal. According to the present invention, as disclosed in Claim 8, it is possible to produce a structure in which the second powder is sintered to bridge the first powder but particles of the first powder are not sintered with each other. In addition, it is now possible to perform sintering while keeping surfaces of the first powder exposed. In other words, it is now possible to perform sintering without inhibiting catalyzer functions, for example, of the first powder.

There is no specific limitation to the shape or dimensions of the porous sintered body according to the present invention. It is possible to obtain porous sintered bodies of a variety of shapes and dimensions as far as the fibriform vanisher material employed allows formation by interlacing or other means of structuring the material into the shape. For example, wet papermaking method may be employed as disclosed in Claim 10, to obtain sheet-like porous bodies having a thickness ranging from 5 µm through 30 µm.

On the other hand, water stream or air stream may be utilized to accumulate and interlace the fibriform vanisher material, to make fiber bodies having complicated shapes or three-dimensional shapes. Then, causing surfaces of the fiber to hold a sintered body, porous sintered bodies of desired shapes are obtained.

Claim 11 discloses an arrangement in which the sintered wall has its outer circumference provided with a plated layer. By necking-sintering the powder, it is possible to form corrugations which follow the shape of the sintered powder on the sintered wall. Since the plated layer is formed on the corrugations in a laminated fashion, the plated layer is also formed with corrugations, resulting in remarkable increase in the surface area of the plated layer. In cases where this arrangement is utilized to provide a plated layer of platinum serving as a catalyzer layer for example, remarkably high catalyzer effect is obtained. Also, when the catalyzer is made of a precious metal, the invention makes it possible to reduce cost of manufacture compared to conventional catalyzer filters, since the invention is capable of reducing the amount of the precious metal without decreasing catalyzer performance. There is no specific limitation to the method for forming the plated layer, so varieties of conventional methods can be employed. There is no specific limitation, either, to material for the plated layer or the thickness of the plated layer.

Claim 12 discloses an arrangement in which the sintered wall has its outer circumference provided with a sintered microparticulate layer. Preferably, the micro particles are provided by nanoparticles. For example, a fine metal powder having a size of 20 nm through 900 nm can be used. Nanoparticles have much lower sintering temperature than temperatures for sintering the sintered wall. Thus, it becomes possible to form the sintered microparticulate layer without altering the shape of the sintered wall.

The micro particles for making the sintered microparticulate layer can be applied by first forming a porous sintered body, then impregnating a slurry which contains the micro particles, and finally removing solvent components. There is no specific limitation to material from which the sintered microparticulate layer is made. For example, catalyzer metals such as platinum and rhodium may be used. There is no specific limitation, either, to the thickness of the sintered microparticulate layer. For example, it is possible to form a micro particle layer which has a thickness of 20 nm through 900 nm or greater.

The sintered microparticulate layer may be made by fusion sintering, or may be made by necking sintering by way of diffusion junction. If necking sintering is utilized, the shape of micro particles is partially retained, which further increases the surface area of the porous sintered body. It is also possible to form the sintered microparticulate layer as a porous layer.

Claim 13 discloses the porous sintered body which is obtained by integrally sintering a plurality of porous bodies each provided by an interlaced or otherwise structured fibriform vanisher material having its outer circumferential region holding a sinterable powder.

The porous sintered body according to the present invention is made by first forming, and then sintering a porous body of an interlaced fibriform vanisher material having its outer circumferential surface holding a sintering powder. This arrangement makes it possible to obtain porous sintered bodies of a uniform porosity in a variety of three-dimensional shapes. Also, it is possible to alter the porous body in many ways before sintering. For example, holes may be drilled, and bending operations may be performed. Also, modifications may be made after a plurality of porous bodies are assembled to each other.

Claim 14 discloses a method of making a porous sintered body. The method includes: a fibriform vanisher material formation step of interlacing or otherwise structuring a fibriform vanisher material into a porous body of a desired shape; a sintering powder application step of applying a sinterable powder on outer circumferential surfaces of the fibriform vanisher material; a fibriform vanisher material vanishing step of vanishing the fibriform vanisher material; and a sintering step of sintering the powder thereby obtaining a porous sintered body which includes: hollow cores resulting from vanishing the fibriform vanisher material; and sintered walls resulting from sintering the powder.

As disclosed in Claim 15, the sinterable powder is sintered, and absent regions are formed in the sintered wall, providing communication between the hollow cores and outside, in the sintering step.

For example, by adjusting the lamination thickness of the sinterable powder, the sintering temperature or the sintering time, it is possible to make the sintered wall shrink by a predetermined amount, thereby obtaining the absent part of a desired shape or size. The absent part provides communication between the cores and the voids, thereby increasing further the surface area available for catalyzer reaction for example.

As disclosed in Claim 16, preferably, the sintering powder is applied in one through three layers on the outer circumferential surfaces of the fibriform vanisher material in the sintering powder application step. By applying the sintering powder in one through three layers on the outer circumferential surfaces of the fibriform vanisher material, porous sintered bodies having high levels of porosity are obtained. The arrangement also allows to form desired absent parts.

It is preferable, as disclosed in Claim 17, that mutually adjacent powder particles are necking-sintered in the sintering step. This results in formation of corrugations on surfaces of the sintered wall, whereby there is a remarkable increase in internal surface area of the obtained porous sintered bodies. The necking sintering is performed easily by selecting sintering temperatures and time.

There is no specific limitation to the formation step. For example, when a sheet-like formed-body is to be made, it can be achieved by employing a papermaking technique such as wet papermaking method, or a technique for making non-woven cloth. There is no specific limitation to the powder application step, either. For example, the step can be accomplished by soaking a formed body which is made of the fibriform vanisher material into a slurry in which a sintering powder is dispersed.

Claim 18 discloses a method in which the formation step includes: a slurry adjusting step of adjusting a slurry by mixing the fibriform vanisher material, the sinterable powder and a dispersion liquid in which these components can stay in a mixed state in a dispersed manner; and a paper-making step of forming a sheet-like body out of the slurry by means of wet papermaking method; whereas the powder application step includes a dehydrating-drying step of dehydrating and/or drying the sheet-like formed body which contains the slurry thereby allowing the powder to be held on an outer circumference of the interlaced fibriform vanisher material.

Also, in Claim 19, the sintering powder application step includes: a slurry adjusting step of adjusting a slurry by mixing the sinterable powder with a dispersion liquid in which these components can stay in a mixed state in a dispersed manner; an impregnation step of impregnating the porous body, which has been formed into a desired shape in the fibriform vanisher material formation step, with the slurry in which the sinterable powder is dispersed; and a dehydrating-drying step of dehydrating and/or drying the formed body which contains the slurry thereby allowing the powder held on an outer circumference of the interlaced fibriform vanisher material.

Claim 20 discloses an arrangement that the powder includes a first powder and a second powder each having a different sintering temperature from each other; and with this, the sintering step includes: a first sintering step of sintering the second powder to bridge particles of the first powder before the first powder begins sintering.

Claim 21 discloses an arrangement that the first sintering step is started before the fibriform vanisher material vanishes. Starting the first sintering step before the fibriform vanisher material vanishes ensures that the first powder is retained along the outer circumferential surfaces of the fibriform vanisher material. Thus, sintered walls are formed along the outer circumferential surfaces of the fibriform vanisher material. It should be noted here that the second powder need not be melted in the first sintering step; rather it is enough as far as particles are bonded to exert a desired level of shape retention. For example, it is enough if particle surfaces are activated by heating so that the second powder exerts a necessary level of adhesion to surfaces of the first powder thereby takes hold on the first powder. Also, it is preferable that the first powder has a particle size suitable for being held along the outer circumferential surface of the fibriform vanisher material, whereas the second powder has a particle size suitable for finding ways to enter gaps between particles of the first powder held along the outer circumferential surface of the fibriform vanisher material. The arrangement allows the second powder to be sintered to bridge particles of the first powder.

The second powder can be applied onto the outer circumference of the fibriform vanisher material together with the first powder during the sintering powder application step. As another option, a separate sintering powder application step may be employed only for applying the second powder. As still another arrangement, the fibriform vanisher material may contain the second powder.

As disclosed in Claim 22, the method may further include a second sintering step of sintering particles of the first powder with each other after the fibriform vanisher material has varnished. Also, depending on necessity, the sintering step may be stopped while the first powder is not yet sintered but particles of the first powder which are not yet sintered to each other have already been bridge-sintered via the second powder, to obtain a specific type of porous sintered bodies.

Claim 23 discloses an arrangement that the fibriform vanisher material formation step includes: a lamination step of laminating a plurality of fibriform vanisher material of desired shapes; and/or a fibriform vanisher material modification step of working on the fibriform vanisher material.

A formed body which has gone through the dehydrating-drying step has a sinterable powder on outer circumferential surfaces of its interlaced fibriform vanisher material. Thus, a plurality of the formed bodies may then be combined and sintered together. Through this, formed bodies of desired shapes can be easily made. As a different process, a plurality of porous bodies, each formed by interlacing or otherwise structuring a fibriform vanisher material, may be combined first, then followed by a step of applying a sintering powder. Further, the formed body may be modified with such operations as drilling holes, bending, etc.

Claim 24 discloses a method wherein the sintering powder application step includes a plurality of steps for application of different sintering powders. For example, when applying powders of significantly different specific weights from each other, a plurality of steps as described above may be performed in order to distribute the powders uniformly all over the outer circumferential surfaces of the fibriform vanisher material.

### ADVANTAGES OF THE INVENTION

The invention makes it possible to obtain porous sintered bodies which have a uniform porosity and desired shapes.

### BRIEF DESCRIPTION OF THE DRAWINGS

Fig. 1 is an electron micrograph of a porous sintered body according to the present invention.
Fig. 2 is diagrammatic illustration of a sheet-like formed-body formed from a fibriform vanisher material.
Fig. 3 is an enlarged illustration of a primary portion, rendering how the fibriform vanisher material is interlaced.
Fig. 4 is an illustration, rendering an outer circumferential region of the fibriform vanisher material in Fig. 3 holding a powder.
Fig. 5 is an illustration, rendering a section of the fibriform vanisher material having its outer circumferential region holding the powder.
Fig. 6 is an enlarged illustration of a primary portion, rendering an axial section of the fibriform vanisher material in Fig. 5.
Fig. 7 is an enlarged illustration of a primary portion, rendering a section showing a sintered state of the powder shown in Fig. 6.
Fig. 8 is an illustration of a second embodiment, rendering an outer circumferential region of a fibriform vanisher material holding a powder.
Fig. 9 is an enlarged illustration of a primary portion, rendering a section showing a sintered state of the powder shown in Fig. 8.
Fig. 10 is an illustration of a third embodiment, rendering an outer circumferential region of a fibriform vanisher material holding powders.
Fig. 11 is an enlarged illustration of a primary portion, rendering a section to show how a first of the powders which are shown in Fig. 10 is sintered.
Fig. 12 is an enlarged illustration of a primary portion, rendering a section showing a second of the powders which are shown in Fig. 10 is sintered.
Fig. 13 is an illustration showing a sectional view of a fourth embodiment of the present invention.
Fig. 14 is an illustration showing a sectional view of a fifth embodiment of the present invention.
Fig. 15 shows an embodiment of a porous sintered body which includes a plated layer. Fig 15 (a) is an electron micrograph showing a surface provided with a plated layer versus a surface not provided with a plated layer; Fig. 15(b) is an electron micrograph showing a section of a portion provided with a plated layer; and Fig. 15 (c) is an EDX element analysis photography of the section in Fig. 15(b).
Fig. 16 shows an embodiment of a porous sintered body which includes a microparticulate coating layer. Fig. 16(a) is an electron micrograph of a surface provided with a sintered microparticulate layer of Ni nanoparticles; Fig. 16(b) is an electron micrograph of a surface provided with a sintered microparticulate layer of Pt nanoparticles; and Fig. 16 (c) is an electron micrograph of a surface not provided with a microparticulate coating layer.

### MODE FOR CARRYING OUT THE INVENTION

Hereinafter, embodiments according to the present invention will be described specifically, based on the drawings.

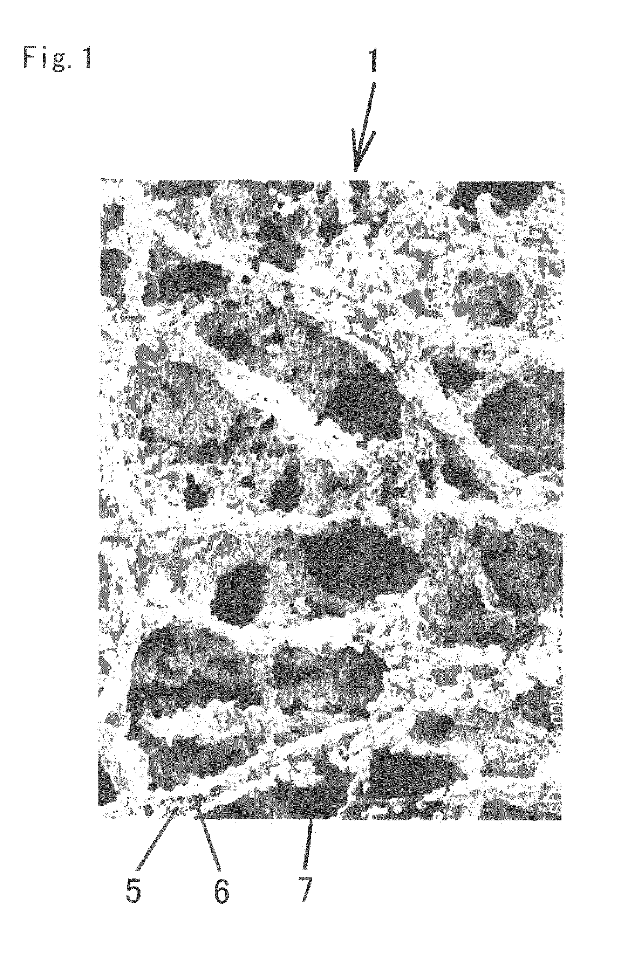

Fig. 1 is an electron micrograph showing an example of porous sintered body according to the present invention. The embodiment is an application of the present invention to a porous sintered body made from a stainless steel powder.

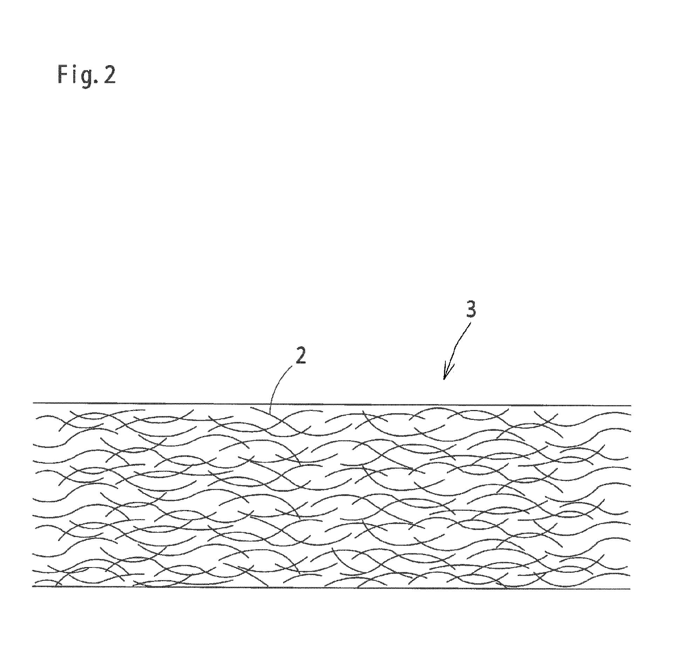

A porous sintered body 1 is made of a sintered wall 6 along an outer circumferential surface of an interlaced fibriform vanisher material. As shown in Fig. 2, the porous sintered body 1 according to the present embodiment is made by interlacing a fibriform vanisher material 2 into a predetermined form, i.e., into a porous body 3, then having the vanishing material's outer circumferential region hold a powder and then sintering the powder. In the present embodiment, the fibriform vanisher material 2 is like a short-fiber and this material is interlaced to form the porous body 3. However, a continuous fiber may be interlaced or otherwise structured into a sheet-like porous body.

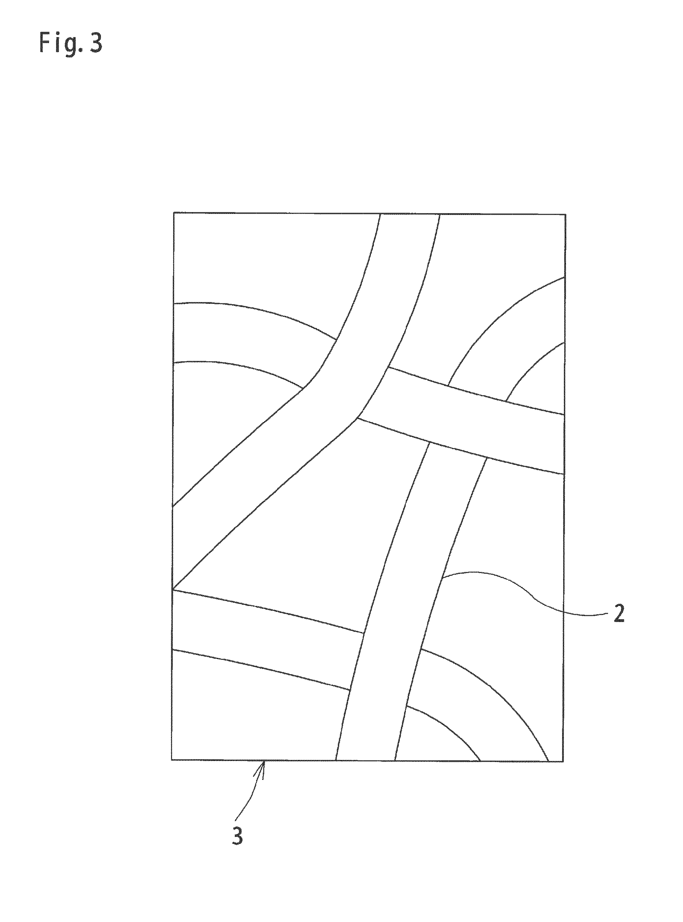

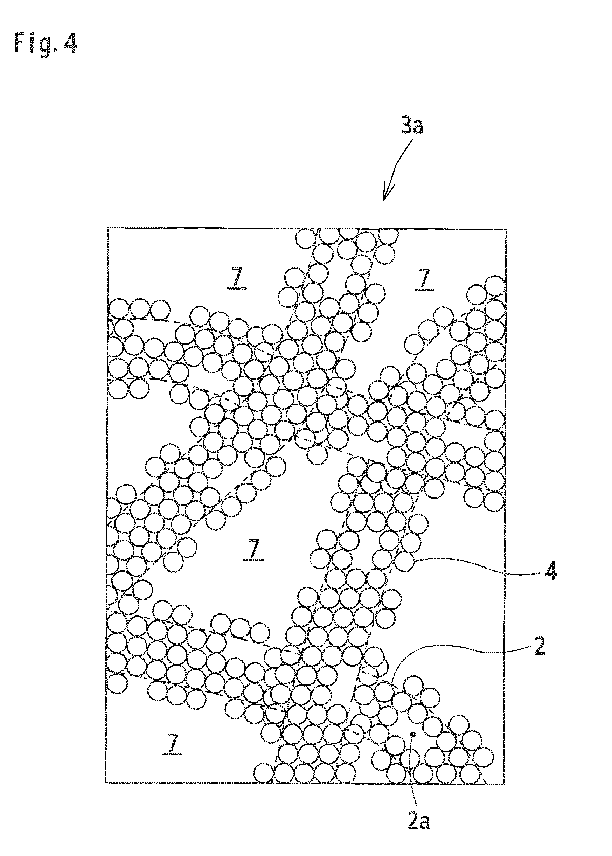

Fig. 3 is an enlarged illustration, rendering a state of the interlaced fibriform vanisher material 2. Also, Fig. 4 is an illustration, rendering a state in which a powder 4 is held on the outer circumferential surface of the fibriform vanisher material 2. In the present embodiment, the outer circumferential surface of the fibriform vanisher material 2 is coated with one through three laminated layers of the powder 4. For the sake of easier understanding, Fig. 4 illustrates only one layer of a powder of ball-shaped particles of a uniform diameter.

In reality, the powder 4 is held in a laminated manner in one through three layers. In addition, it is not necessary that there is a uniform lamination of the powder on all regions; rather, it is enough if there is a laminated coating of one through three layers. Also, it is acceptable even if part or a significant part is not covered by the powder.

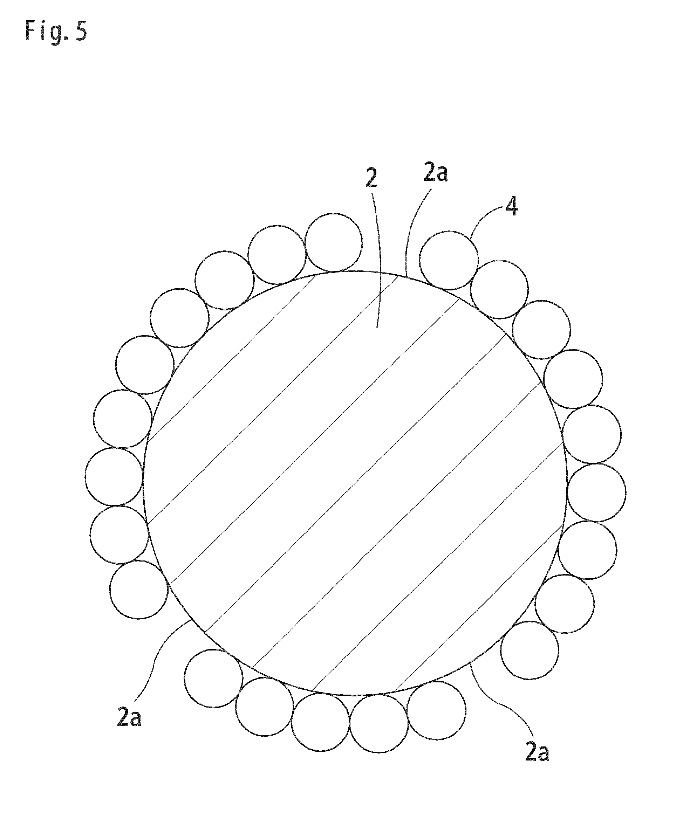

Fig. 5 is an illustration, rendering a section of the fibriform vanisher material which holds the powder. As shown in this figure, the powder 4 is held along the outer circumferential surface of the fibriform vanisher material 2. Although Fig. 5 illustrates the fibriform vanisher material 2 and the powder 4 as having circular sections, this is not limiting. There is no limitation, either, on the relative sizes of the fibriform vanisher material 2 and the powder 4. Any size is acceptable as far as a plurality of powder particles can be held along an outer circumferential surface of the fibriform vanisher material.

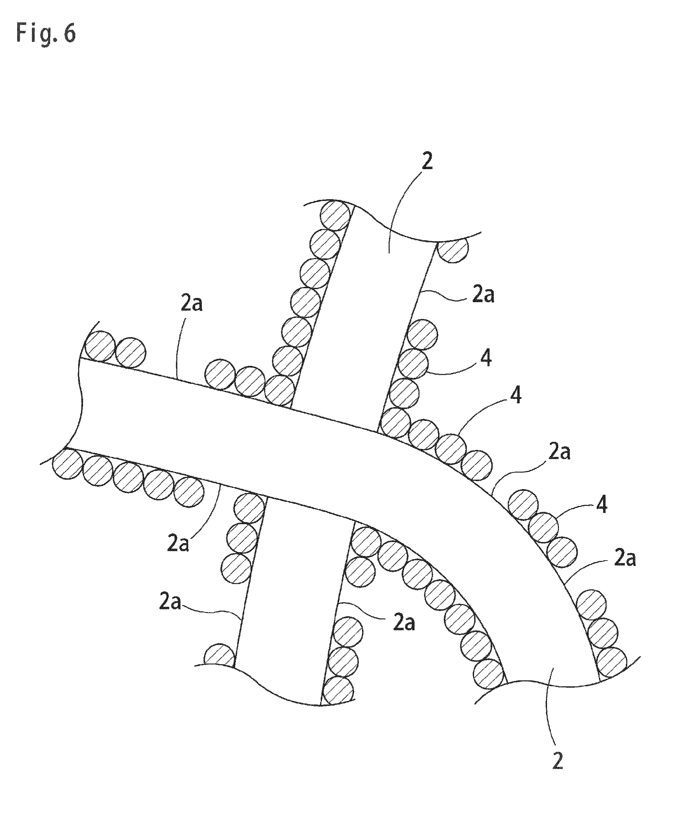

Fig. 6 shows an axial section of the fibriform vanisher material 2. As shown in this figure, the powder 4 is held along the outer circumferential surface of the fibriform vanisher material 2 while there are certain regions 2a which do not hold the powder.

As the porous body 3a, which is loaded with powder held by the outer circumferential surface of the fibriform vanisher material 2, is heated, the fibriform vanisher material 2 vanishes and mutually adjacent particles of the powder 4 are sintered to each other.

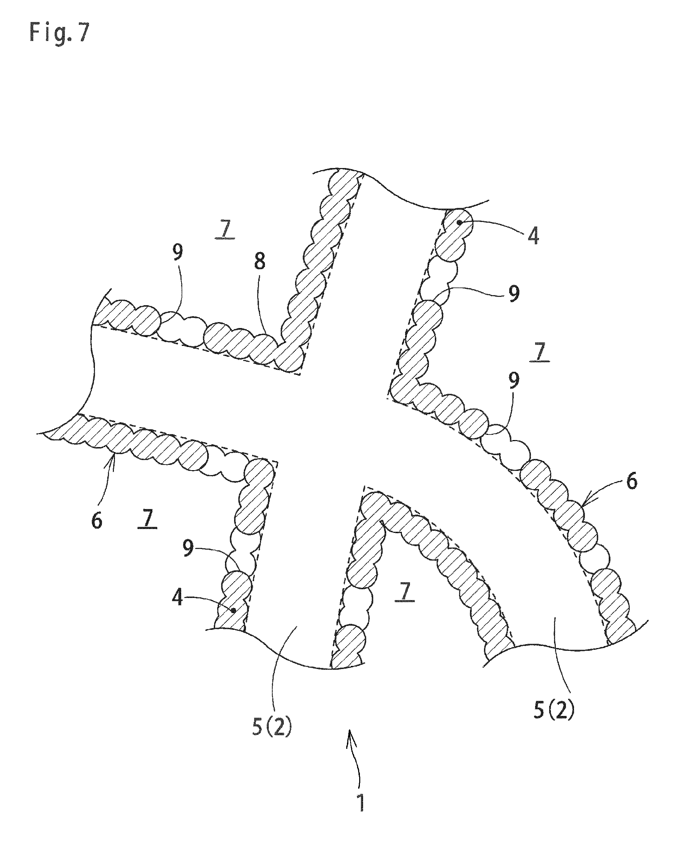

In the present embodiment, settings are made for heating temperature and time so that there will be necking sintering first occurring between mutually adjacent powder particles as shown in Fig. 7. The mutually adjacent particles of the powder 4 then become bonded to each other at their places of mutual contact, and then, the sintering is brought to an end while each powder particle still retains part of its outer form. The necking sintering is capable of causing powder particles to be sparsely bonded with each other at temperatures lower than temperatures at which the powder particles are molten-sintered. Therefore, even after the fibriform vanisher material has varnished at temperatures lower than a melting temperature of the powder, it is possible to keep the powder in a shape that follows the outer circumferential surface of the fibriform vanisher material 2 while continuing with the sintering.

Fig. 7 shows a porous sintered body 1, which includes hollow cores 5 having a shape of the interlaced fibriform vanisher material 2 which has been vanished; sintered wall regions 6 formed by sintering the powder 4 around the cores 5; and voids 7 between the sintered wall regions 6.

In the present embodiment, the sintered wall regions 6 have their surfaces provided with corrugations 8 from the shape of particles of the powder 4 as a result of necking sintering performed to the powder 4. Also, the regions 2a in Fig. 5, where there was no powder 4 present on the outer circumferential region of the fibriform vanisher material 2, are turned into absent regions 9. The sintered wall regions 6 as a whole is cylindrical, following the outer circumferential surface of the fibriform vanisher material 2, with the absent regions 9 scattering all over, having a structure that hollow cores 5 and void 7 communicate with each other via absent regions 9.

The void 7 substantially follows the shape of the porous body 3 which is formed from the fibriform vanisher material 2 since the porous sintered body 1 is provided by the sintered wall regions 6 made by sintering one through three layers of the powder 4 held on an outer circumferential surface of the fibriform vanisher material 2. Further, since the sintered wall regions 6 is provided by a combination of the cores 5 and the void 7 which communicate with each other via the absent regions 9, voids are formed on both inside and outside of the sintered wall regions 6. Therefore, it is possible to obtain a porous sintered body 1 which has a greater porosity than that of a porous body 3 which is formed by interlacing the fibriform vanisher material 2. Also, since both of the inside and the outside of the sintered wall regions 6 provide working surfaces, it is possible to make a porous sintered body 1 which has a very large surface area inside.

Also, through the necking sintering of the powder, corrugations 8 are formed on surfaces of the sintered wall regions 6. This further increases the surface area in the porous body. Further, since the powder's shape is retained, it becomes possible to decrease the amount of shrinkage at the time of sintering, making it possible to obtain a porous sintered body 1 of increased accuracy in the form and dimensions.

In the present embodiment, Kozo *(Broussonetia kazinoki* x *B. papyrifera*) fiber of an approximate diameter of 20 µm and an average fiber length of 5 mm was used to form a sheet-like porous body which had a thickness of approximately 20 µm, with a wet papermaking method. There is no specific limitation to the material or the shape of the fibriform vanisher material as far as the vanisher material vanishes by the time the powder 4 has been sintered. Examples include not only natural fibers from Mitsumata (*Edgeworthia chrysantha),* Kozo (*Broussonetia kazinoki* x *B. papyrifera*), etc. but also artificial fibers such as polyester, polyethylene, rayon and acrylic; and pulp as well. There is no specific limitation to the diameter or the length of the fiber, as far as it is possible to interlace the fiber into a porous body of a desired shape. For example, the formed body may be formed of an endless fiber produced from electrospinning, etc. Also, even in cases where the fibriform vanisher material 2 vanishes before the powder 4 starts melting and begins sintering, the powder is in the state of diffused junction and therefore it is possible to proceed with the sintering of the powder 4 while keeping the shape of the sintered wall regions 6.

There is no specific limitation, either, to the forming process of forming the porous body 3a from the fibriform vanisher material 2. For example, wet papermaking method can be employed to form sheet-like porous bodies. Also, needle punching and other non-woven fabric making methods may be used to provide porous bodies. Further, porous bodies may be provided in a three-dimensional manner by using air streams, for example, when interlacing fibers. By selecting appropriate dimensions and a shape for the fibriform vanisher material, and a mode of interlacing, it is possible to obtain porous bodies of predetermined dimensions and shapes. It is also possible to use cloth-like porous bodies made by weaving or other methods.

In the present embodiment, the porous body 3a is formed from the fibriform vanisher material 2, and the powder 4 is held on the outer circumferential surface of the fibriform vanisher material 2 while it is sintered. Therefore, it is possible not only to obtain porous sintered bodies 1 of various shapes but also to achieve a uniform porosity in all regions of the porous sintered body 1. For example, it is possible to make a series of porous sintered bodies, from a very thin sheet-like porous sintered body to a thick, three-dimensional porous sintered body, of a uniform porosity and predetermined shapes.

There is no specific limitation, either, on materials from which the powder 4 is made. Examples of the materials include metals such as nickel and copper, and ceramic powders as well. Also, two or more powder materials may be mixed to produce the powder. Further, the powder may be made of a mixture of a sintering powder and a non-sintering powder. In the present embodiment, the powder particles are bonded to each other by necking sintering, so it is possible to sinter while retaining all surface characteristics of each powder. This means that by using a mixed powder which contains a powder having catalyzer capabilities, it is possible to obtain a porous sintered body which has high catalyzer capabilities.

Also, in this first embodiment, the powder 4 is provided by stainless steel powder of particles having an average diameter (average particle size) of 3 µm; however, there is no specific limitation to this, either. It is preferable, however, that the particle is of a size which can be arranged and held in a sinterable manner around the fibriform vanisher material 2. For example, the powder 4 should have an average particle size of 1/5 through 1/50 of the diameter of fibriform vanisher material 2. If the powder 4 has a particle diameter which is greater than 1/5 of the diameter of the fibriform vanisher material 2, it becomes difficult to hold the powder around the fibriform vanisher material 2. On the other hand, if the powder 4 has a particle diameter which is smaller than 1/50 of the diameter of the fibriform vanisher material 2, it becomes impossible to retain the form or achieve strength during and/or after sintering.

There is no specific limitation, either, to the sintering powder application step of having the outer circumferential region of the fibriform vanisher material 2 hold the powder 4. By soaking the porous body 3a, which is formed by interlacing a fibriform vanisher material, into, e.g., a slurry which contains a powder to be sintered, it is possible to have the outer circumferential region of the fibriform vanisher material 2 hold the powder. For example, a metal powder is dispersed at a predetermined concentration in an aqueous solution of a binder such as carboxymethyl cellulose. Then, the porous body 3a formed of the fibriform vanisher material 2 is soaked into the solution, and thereafter, dehydrated or naturally dried. With this method it is possible to obtain a porous body which holds the metal powder on its outer circumferential region of the fibriform vanisher material 2. By adjusting the metal powder concentration, soaking time, etc. in the sintering powder application step, it is possible to adjust the amount of the metal powder applied.

Also, if wet papermaking method is used to form a sheet-like porous body, the powder 4 may be added to a slurry which contains the fibriform vanisher material 2, whereby it becomes possible to interlace the fibriform vanisher material and to make the powder held by the outer circumferential region of the fibriform vanisher material 2, simultaneously.

The fibriform vanisher material according to the present embodiment is made from Kozo (*Broussonetia kazinoki* × *B. papyrifera*), and is vanishable when heated to a temperature of approximately 500 degrees Celsius in the vanishing material vanishing step. The powder 4, on the other hand, is brought to necking sintering when heated to an approximate temperature of 800 degrees Celsius in the sintering step. The vanity-formation sintering step and the sintering step may be performed as a continuous process or as separate processes. It should be noted here that the temperature for the vanishing material vanishing step and for the sintering step are selected according to the materials to be used.

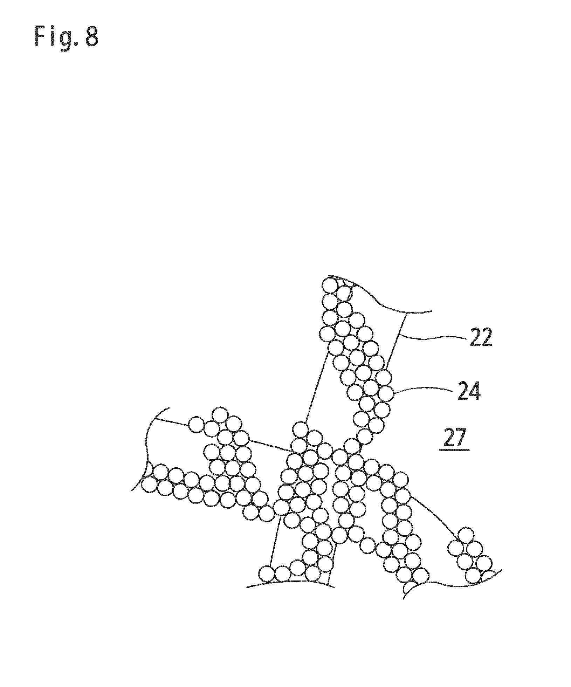

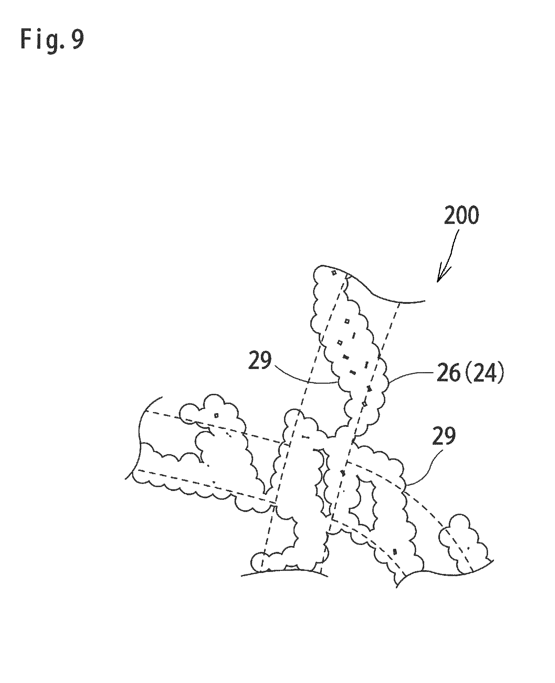

Fig. 8 and Fig. 9 shows a second embodiment according to the present invention. Whereas in the porous sintered body according to the first embodiment, the powder 4 is applied on most of the outer circumferential region of the fibriform vanisher material 2 and then sintering follows, it is possible, as shown in Fig. 8, to form a porous sintered body by applying a powder 24 onto part of an outer circumferential region of a fibriform vanisher material 22.

Specifically, even if the powder 24 is applied only partly on the fibriform vanisher material 22 as shown in Fig. 8, it is possible to form a porous sintered body 200 as far as powder particles are sufficiently adjacent to each other for necking sintering. Also, in this case, mutually adjacent particles of the powder 24 agglutinate with each other in the process in which the fibriform vanisher material 22 vanishes, and for this reason, it is possible to form a porous sintered body, as shown in Fig. 9, which has a high ratio of absent regions.

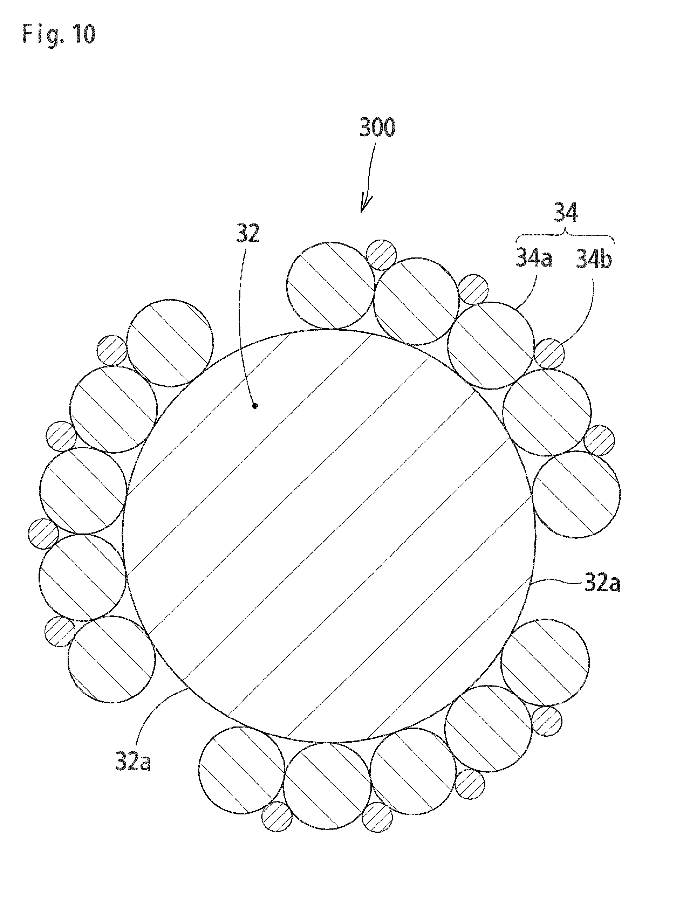

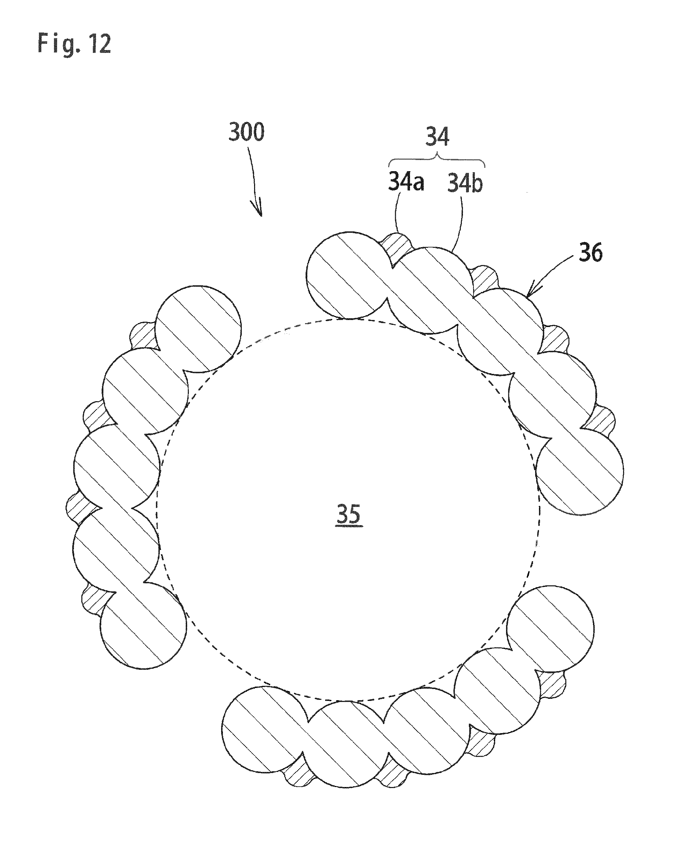

Fig. 10 and Fig. 12 show a third embodiment of the present invention. A porous sintered body 300 according to the third embodiment is made by applying and sintering two kinds of powders on an outer circumferential region of a fibriform vanisher material 32. Description will not be made for the fibriform vanisher material 32, the sintering powder application step, etc. because they are the same as those in the first embodiment.

As shown in Fig. 10, during the sintering powder application step, the outer circumferential region of the fibriform vanisher material 32 holds a powder 34 which contains a first powder 34a of a larger particle size (average diameter), and a second powder 34b of a smaller particle size than the first powder. Fig. 10 is an illustration corresponding to Fig. 5, rendering how the applied powder particles distribute.

Preferably, the particle size of the first powder 34a and that of the second powder 34b are in a relationship that a particle of the second powder 34b can sit between particles of the first powder 34a. For example, it is preferable that the second powder 34b has an average particle diameter which is not greater than 1/10 of an average particle diameter of the first powder 34a. Also, the first powder 34a and the second powder 34b are mixed with each other at a ratio no higher than a ratio at which all sitting positions provided by the first powder 34a will be occupied. When a powder which contains the first powder 34a and the second powder 34b is held on an outer circumferential region of the fibriform vanisher material 32, the state as shown in Fig. 10 is achieved.

The first powder 34a has a higher sintering initiation temperature than a vanishing completion temperature of the fibriform vanisher material 32, whereas the second powder 34b has a lower sintering initiation temperature than a vanishing completion temperature of the fibriform vanisher material 32. For example, the first powder 34a may be provided by a stainless steel powder, with the second powder 34b made of silver.

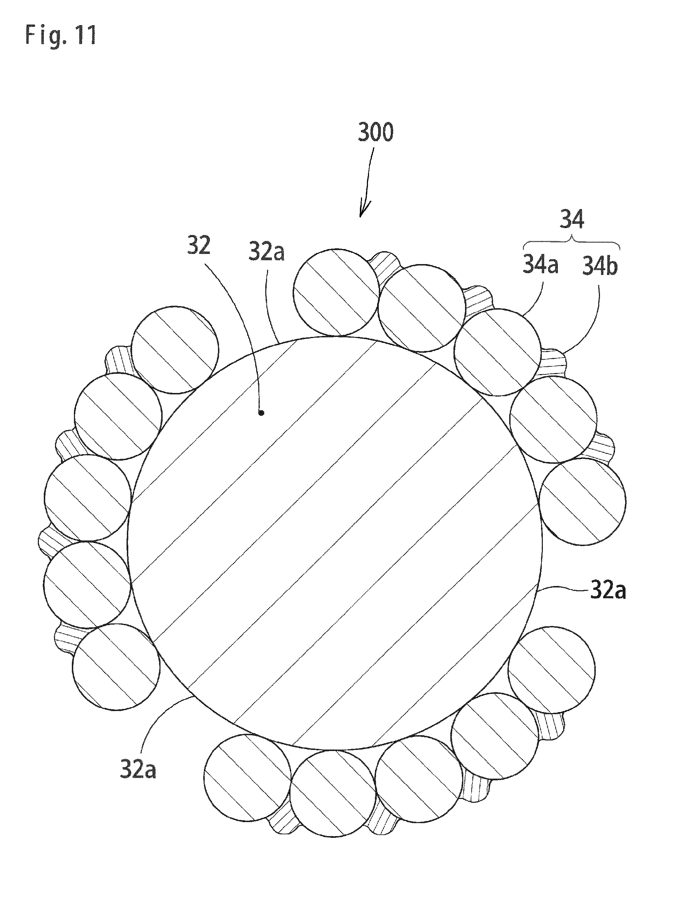

From the state shown in Fig. 10, temperature is increased: Then, the fibriform vanisher material 32 begins vanishing first, i.e., a vanishing material vanishing step takes place. While the vanishing material vanishing step is still going on, as shown in Fig. 11, the second powder 34b begins being sintered, i.e., a first sintering step takes place in which bridging is provided between particles of the first powder 34a. The fibriform vanisher material 32 is still partially in existence in this process, so the bridging by the second powder 34b between the particles of the first powder 34a is achieved while the particles of the first powder 34a are remaining at their positions.

Thereafter, sintering temperature is increased and a second sintering step takes place in which particles of the first powder 34a are sintered with each other, and as a result, a porous sintered body 300 is obtained which has a section as shown in Fig. 12.

If a high sintering temperature is required to sinter the powder, there can be a case where the fibriform vanisher material 32 has vanished completely before the powder begins being sintered. In such a case as this, it will become impossible to sinter while keeping the powder at the position along an outer circumference of the fibriform vanisher material 32. Sintering under such a state can cause unacceptably large deformation in the sintered wall, leading to inability to obtain a porous sintered body of a predetermined porosity or predetermined shape.

By using the second powder 34b which has a lower sintering initiation temperature than a vanishing completion temperature of the fibriform vanisher material 32, it becomes possible to fix the first powder 34a via the second powder 34b while the particles are held on the outer circumferential region of the fibriform vanisher material 32, after the fibriform vanisher material 32 has vanished. Then, by sintering particles of the first powder with each other 34a thereafter, it becomes possible to sinter the sintering powder while the powder particles are held along the outer circumferential surface of the fibriform vanisher material. Hence, this makes it possible to make a porous sintered bodies which has a high level of forming accuracy.

In this case, use of the second powder 34b which has a small particle size and has a high surface activity makes it possible that the second powder 34b begins to be bonded by way of diffused junction at a lower temperature than the vanishing completion temperature of the fibriform vanisher material 32. This makes it possible to sinter the first powder 34a while retaining the shape of the sintered wall.

In the present embodiment, the first powder 34a and the second powder 34b are provided by powders of different metals. However, it is possible to use powders which are made of the same material. In this case, it is preferable that the second powder 34b has a particle size not greater than 1/10 of a particle size of the first powder 34a. Powder's surface activity increases as the particle size decreases, which makes it possible to start sintering at a lower temperature.

Also, in the present embodiment, the second sintering step is performed to sinter the first powder 34a; however, it is acceptable to stop without sintering the second powder. In this case, a resulting porous sintered body has a structure that particles of the first powder 34a are bridged by the second powder 34b.

For example, when sintering a functional ceramic which has a very high sintering temperature, there can be cases where the sintering temperature is so high that it is impossible to mix any other materials such as metal. The present embodiment makes it possible to produce a structure in which the second powder 34b is sintered to bridge the first powder 34a but particles of the first powder are not sintered with each other. In other words, it is now possible to perform sintering while keeping most of surfaces of the first powder 34a exposed, i. e. , it is now possible to perform sintering without inhibiting catalyzer functions, for example, of the first powder 34a.

The second powder 34b can be applied onto the outer circumference of the fibriform vanisher material 32 together with the first powder during the sintering powder application step. As another option, a separate sintering powder application step may be employed only for applying the second powder 34b. As still another arrangement, the fibriform vanisher material may contain the second powder.

There is no specific limitation to material from which the second powder is made. There can be an arrangement where the second powder is provided by a residue component, carbide, etc. which occur when the fibriform vanisher material or solvent in slurry vanishes in the fibriform vanisher material vanishing step or the sintering step. There may be arrangements where the second powder is designed to stay after the first powder is sintered, or there may be arrangements where the second powder is designed to vanish.

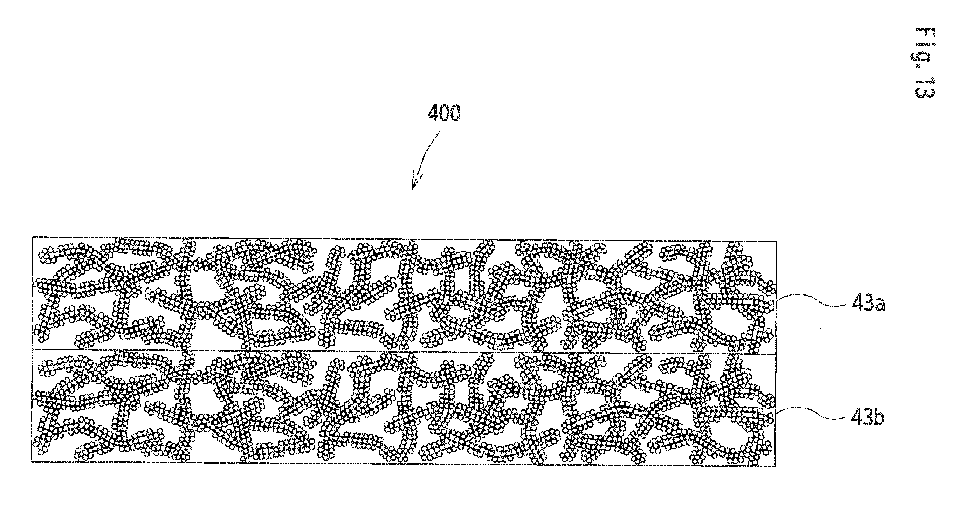

Fig. 13 shows a fourth embodiment of the present invention. In the fourth embodiment, a plurality of sheet-like porous bodies 43a, 43b made from a fibriform vanisher material which holds a powder are laminated and sintered integrally with each other.

In the present embodiment, powder is held on outer circumferential surfaces of the fibriform vanisher material which provides each of the porous bodies 43a, 43b. Therefore, by laminating and then sintering these bodies, it is possible to obtain an integrated porous sintered body. This arrangement makes it possible to obtain porous sintered bodies of a variety of three-dimensional shapes having a uniform porosity.

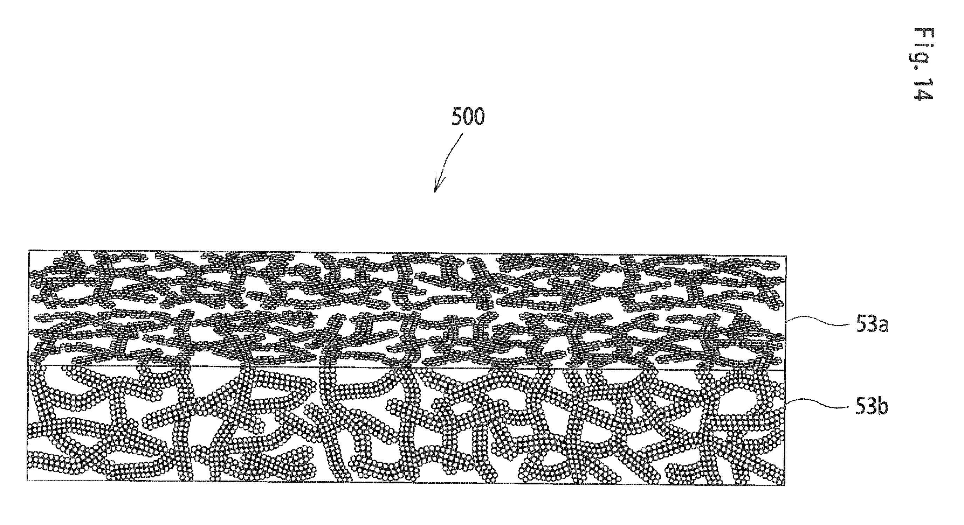

Further, as shown in Fig. 14, there may be an arrangement where a plurality of porous bodies 53a, 53b made from different powders and/or interlaced in different pattern are combined. This makes it possible to obtain a porous sintered body which has different internal composition.

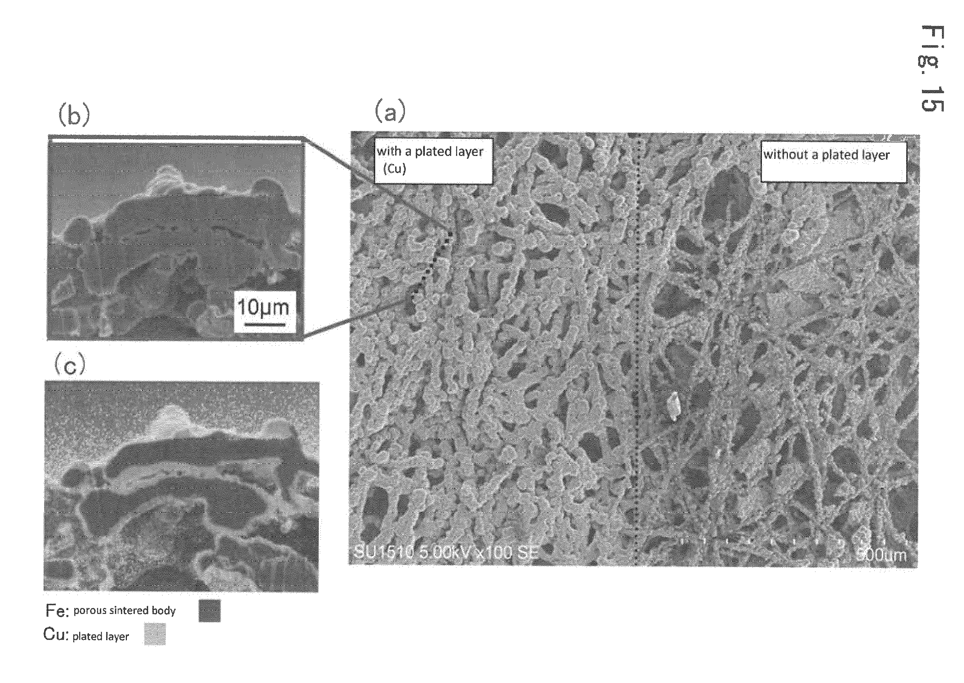

Fig. 15 shows a fifth embodiment of the present invention. In this embodiment, the porous sintered body described thus far has an outer circumferential surface provided with a Cu-plated layer. There is no specific limitation to the method for forming the plated layer or to the thickness of the plated layer. For example, conventional electroplating method is usable to form a plated layer which has a thickness of up to 1 µm.

Fig. 15 (a) shows two electron micrograph: On the right hand side there is shown a surface without a plated layer, while on the left hand side shown a surface provided with a Cu-plated layer. Fig. 15 (b) is an electron micrograph of a section of a porous sintered body formed with the plated layer. Fig. 15(c) is an EDX element analysis photography of the section shown in Fig. 15 (b). Fig. 15 (c) maps a Cu-plated layer of a substantially uniform thickness around an Fe component which is a primary component of the porous sintered body.

In the present embodiment, the sintered wall has corrugations; so the plated layer also has corrugations formed on its surface; and therefore the plated layer has a very large surface area. Hence, in cases where the plated layer is provided by a catalyzer layer made of platinum for example, significantly high performance can be expected as a catalyzer. Also, when the catalyzer is made of a precious metal, the invention makes it possible to reduce cost of manufacture, by reducing the amount of precious metal without decreasing performance.

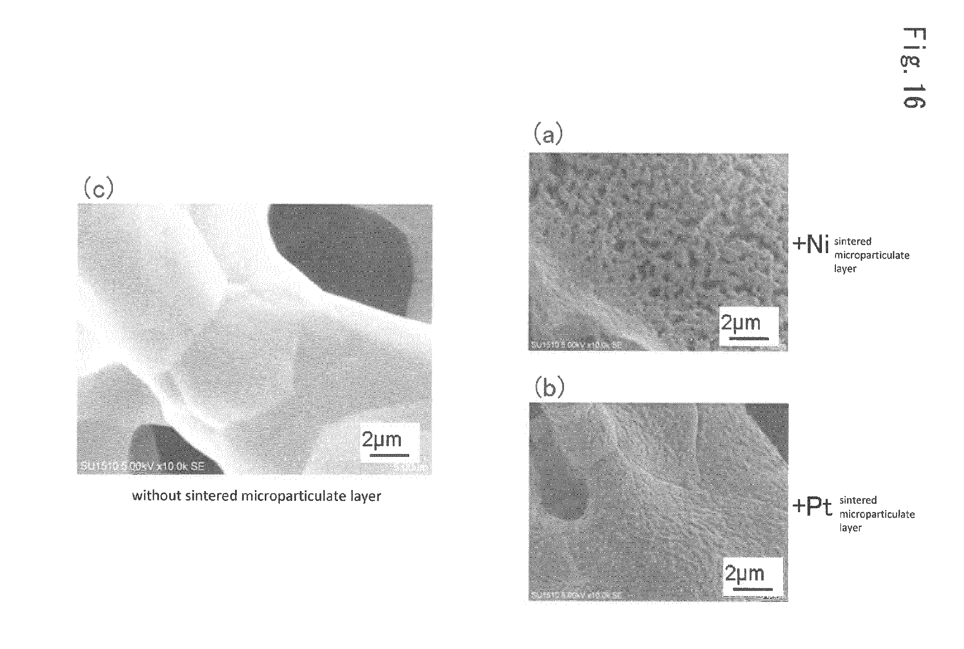

Fig. 16 shows a sixth embodiment of the present invention. In this embodiment, the porous sintered body has its outer circumferential surface provided with a sintered microparticulate layer. The sintered microparticulate layer can be formed as follows for example: First, a sintered metal porous body is soaked into a slurry which contains micro particles, and then solvent is removed by drying for example. Through these steps the micro particles are applied on a surface of the porous body. Thereafter, heating is performed to sintering temperatures of the micro particles, to fix the micro particles on the outer circumferential surface of the porous sintered body.

Fig. 16 (c) shows a surface of a porous sintered body which is not provided with a sintered microparticulate layer. On the other hand, Fig. 16(a) shows a surface of a sintered microparticulate layer formed on a surface of the porous sintered body. The layer has a thickness of 900 nm, and is made of Ni micro particles having an average particle size of 300 nm. Fig. 16(b) shows a surface of a sintered microparticulate layer formed on a surface of the porous sintered body. The layer has a thickness of 100 nm, and is made of Ni micro particles having an average particle size of 30 nm.

In the sixth embodiment, sintering is performed so that the micro particles will retain their shape at least partially on the sintered microparticulate layer. As a result, the surfaces of each sintered microparticulate layer is corrugated, following the shape of the micro particles. This makes it possible to further increase the surface area of the porous sintered body. Hence, by making a sintered microparticulate layer which works as a catalyzer, the invention increases catalyzer effect.

Preferably, the micro particles are provided by metal nanoparticles. For example, nanoparticles having an average particle size of 20 nm through 900 nm can be applied to a thickness of 20 nm through 900 nm or to a greater thickness. Metal nanoparticles is highly surface-active, making it possible to sinter at lower temperatures than temperatures for sintering the porous sintered body. This makes it possible to provide the sintered microparticulate layer while retaining the shape of the sintered wall. For example, the above-described Ni microparticulate sintered layer can be sintered at 600 degrees Celsius. Also, a Pt microparticulate sintered layer can be sintered at 100 degrees Celsius.

The present invention is not limited to the scope covered by the embodiments described thus far. For example, while the embodiments use sheet-like porous bodies, the invention is not limited by this. Types of the fibriform vanisher material and/or the powder described do not limit the present invention, either. Further, in cases where a plurality of powders are used to form a porous sintered body, these powders may be applied to the fibriform vanisher material in a single sintering powder application step, or in a plurality of sintering powder application steps.

### INDUSTRIAL APPLICABILITY

The present invention is capable of providing a porous sintered body which has a uniform porosity, a high level of freedom in forming, allowing to be formed into varieties of shapes and various levels of porosity, and to be formed to an extremely high level of porosity.

### Legend

- 1: Porous sintered body
- 4: Powder
- 2: Fibriform vanisher material
- 5: Core
- 6: Sintered wall
- 7: Void

## Claims

1. A porous sintered body obtained by sintering a powder, comprising:
hollow cores following a vanished shape of an interlaced or otherwise structured fibriform vanisher material;
sintered walls extending longitudinally of the cores and obtained by sintering the powder held around the cores; and
voids between the sintered walls.

2. The porous sintered body according to Claim 1, wherein the sintered walls include absent regions which provide communication between the cores and the voids.

3. The porous sintered body according to Claim 1 of Claim 2, wherein the sintered wall is obtained through necking sintering of the powder which is laminated in one through three layers on outer circumferential regions of the fibriform vanisher material.

4. The porous sintered body according to Claim 1 of Claim 2, wherein the powder has an average particle size of 1/5 through 1/50 of a diameter of the fibriform vanisher material.

5. The porous sintered body according to one of Claims 1 or 2, wherein the powder includes: a first powder which has a higher sintering initiation temperature; and a second powder which has a lower sintering initiation temperature.

6. The porous sintered body according to Claim 5, wherein the first powder has a higher sintering initiation temperature than a vanishing completion temperature of the fibriform vanisher material, whereas
the second powder has a lower sintering initiation temperature than the vanishing completion temperature of the fibriform vanisher material.

7. The porous sintered body according to Claim 5 or 6, wherein the second powder is sintered to bridge particles of the first powder.

8. The porous sintered body according to Claim 5, wherein particles of the first powder are not sintered with each other.

9. The porous sintered body according to Claim 5, wherein the second powder has an average particle size not greater than 1/10 of an average particle size of the first powder.

10. The porous sintered body according to Claim 1 or 2, wherein the porous sintered body is sheet-like and has a thickness of 5 µm through 30 µm.

11. The porous sintered body according to Claim 1 or 2, wherein the sintered wall has an outer circumference provided with a plated layer.

12. The porous sintered body according to Claim 1 or 2, wherein the sintered wall has an outer circumference provided with a sintered microparticulate layer.

13. The porous sintered body according to Claim 1 or 2, obtained by integrally sintering a plurality of porous bodies each provided by an interlaced or otherwise structured fibriform vanisher material having its outer circumferential regions holding a sinterable powder.

14. A method of making a porous sintered body, comprising:
a fibriform vanisher material formation step of interlacing or otherwise structuring a fibriform vanisher material into a porous body of a desired shape;
a sintering powder application step of applying a sinterable powder on outer circumferential surfaces of the fibriform vanisher material;
a fibriform vanisher material vanishing step of vanishing the fibriform vanisher material; and
a sintering step of sintering the powder thereby obtaining a porous sintered body which includes: hollow cores resulting from vanishing the fibriform vanisher material; and sintered walls resulting from sintering the powder.

15. The method of making a porous sintered body according to Claim 14, wherein
in the sintering step,
the sinterable powder is sintered and
absent regions are formed in the sintered wall, providing communication between the hollow cores and its outside.

16. The method of making a porous sintered body according to Claim 14 or Claim 15, wherein the sintering powder is applied in one through three layers on the outer circumferential surfaces of the fibriform vanisher material in the sintering powder application step.

17. The method of making a porous sintered body according to Claim 14 or Claim 15, wherein mutually adjacent powder particles are necking-sintered in the sintering step.

18. The method of making a porous sintered body according to Claim 14 or Claim 15, wherein the fibriform vanisher material formation step includes:
a slurry adjusting step of adjusting a slurry by mixing the fibriform vanisher material, the sinterable powder and a dispersion liquid in which these components can stay in a mixed state in a dispered manner; and
a paper-making step of forming a sheet-body out of the slurry by means of wet papermaking method; whereas
the sintering powder application step includes:
a dehydrating-drying step of dehydrating and/or drying the sheet-like formed-body which contains the slurry, thereby allowing the powder to be held on an outer circumference of the interlaced fibriform vanisher material.

19. The method of making a porous sintered body according to Claim 14 or Claim 15, wherein the sintering powder application step includes:
a slurry adjusting step of adjusting a slurry by mixsing the sinterable powder with a dispersion liquid in which these components can stay in a mixed state in a dispered manner;
an impregnation step of impregnating the prous body, which has been formed into a desired shape in the fibriform vanisher material formation step, with the slurry in which the sinterable powder is dispersed; and
a dehydrating-drying step of dehydrating and/or drying the formed body which contains the slurry thereby allowing the powder held on an outer circumference of the interlaced fibriform vanisher material.

20. The method of making a porous sintered body according to Claim 14 or Claim 15, wherein the powder includes a first powder and a second powder each having a different sintering temperature from each other,
the sintering step including:
a first sintering step of sintering the second powder to bridge particles of the first powder before the first powder begins sintering.

21. The method of making a porous sintered body according to Claim 20, wherein the first sintering step is started before the fibriform vanisher material vanishes.

22. The method of making a porous sintered body according to Claim 20 or Claim 21, further comprising a second sintering step of sintering particles of the first powder with each other after the fibriform vanisher material has varnished.

23. The method of making a porous sintered body according to Claim 14 or Claim 15, wherein the fibriform vanisher material formation step indludes:
a lamination step of laminating a plurality of fibriform vanisher material of desired shapes; and/or a fibriform vanisher material modification step of working on the fibriform vanisher material.

24. The method of making a porous sintered body according to Claim 14 or Claim 15, wherein the sintering powder application step includes a plurality of steps for application of different sintering powders.
